# EUROPEAN PATENT SPECIFICATION

(11) **EP 0 524 374 B1**
(45) Date of publication and mention of the grant of the patent: **30.08.1995**
(21) Application number: 92106263.4
(22) Date of filing: 10.04.1992
(51) Int. Cl.: H01J 9/42, H04N 17/02

(54) **Measuring method and device for beam spot luminescence distribution.**
Verfahren und Apparat zur Messung der Lumineszenzverteilung Verfahren und Vorrichtung zur Messung der Lumineszenzverteilung eines Leuchtflecks.
Procédé et appareil pour mesurer la distribution d'un spot lumineux.

(30) Priority: 24.07.1991 JP 206219/91
(43) Date of publication of application: 27.01.1993
(73) Proprietor: MITSUBISHI DENKI KABUSHIKI KAISHA, Tokyo 100 (JP)
(72) Inventor: Emmoto, Kazuo, c/o Mitsubishi Denki K.K., Nagasaki-shi Nagasaki (JP)
(74) Representative: KUHNEN, WACKER & PARTNER

(56) References cited:
- EP-A- 0 313 795
- US-A- 4 408 163
- US-A- 4 602 272
- IBM Technical Disclosure Bulletin, vol. 28, no. 2, July 1985,page 616
- PATENT ABSTRACTS OF JAPAN, unexamined applications, E field, vol. 13, no. 68,February 16, 1989 THE PATENT OFFICE JAPANESE GOVERNMENT,page 8 E 716
- PATENT ABSTRACTS OF JAPAN, unexamined applications, E field, vol. 11, no. 363,November 26, 1987 THE PATENT OFFICE JAPANESE GOVERNMENT page 34 E 560

## Description

The present invention relates to a measuring method for the beam spot luminescence distribution according to the preamble of claim 1 and a device for measuring the luminescence distribution within the beam spot of an electron beam irradiated on a tube surface of a color cathode ray tube (hereinafter referred to simply as "CRT") according to the preamble of claim 2.

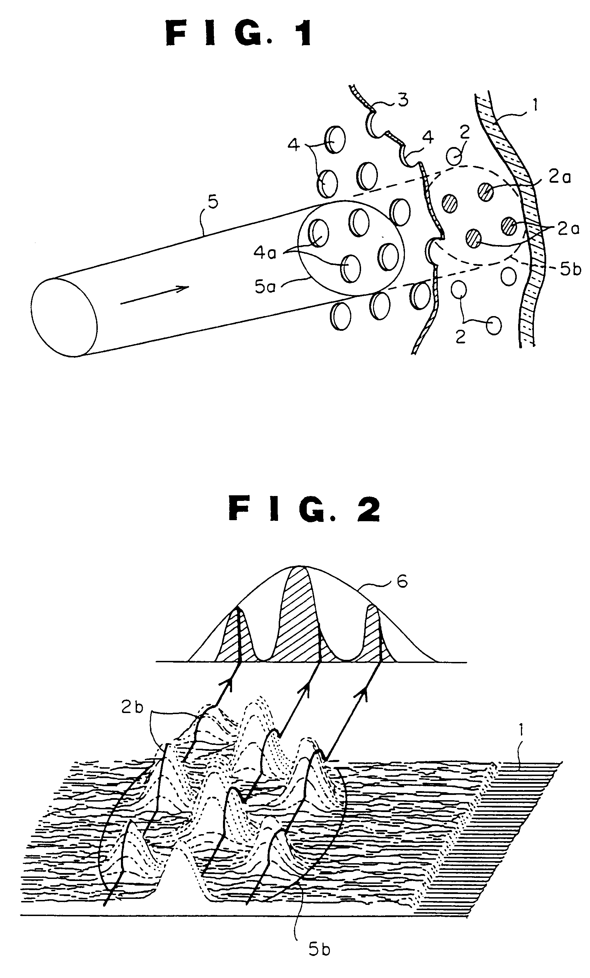

Fig. 1 is a perspective view indicating the inside of a CRT to explain a measuring method for the beam spot luminescence distribution in the prior art. In Fig. 1, numeral 1 designates a tube surface as a display surface of the CRT, and numerals 2, 2a designate fluorescent substances for R, G and B as picture elements applied to the tube surface 1, the hatched fluorescent substance 2a indicating the picture element under luminescence. Numeral 3 designates a shadow mask spaced by a prescribed distance from the tube surface 1, and numerals 4, 4a designate beam passing holes provided corresponding to the fluorescent substances 2, 2a, the hole 4a corresponding to the fluorescent substance 2a. Numeral 5 designates an electron beam being emitted from an electron gun (not shown), and a beam spot 5a of the electron beam 5 is formed on the shadow mask 3 and a beam spot 5b is formed imaginarily in response to the beam spot 5a.

Next, the operation will be described.

An electron beam 5 emitted from an electron gun passes through a plurality of (four in the figure) holes 4a of a shadow mask 3 and irradiates a plurality of fluorescent substances 2a corresponding to the holes 4a so that these fluorescent substances 2a luminesce. Accordingly, the brightness of each of these fluorescent substances 2a is measured in order to detect the luminescence distribution within one beam spot 5b.

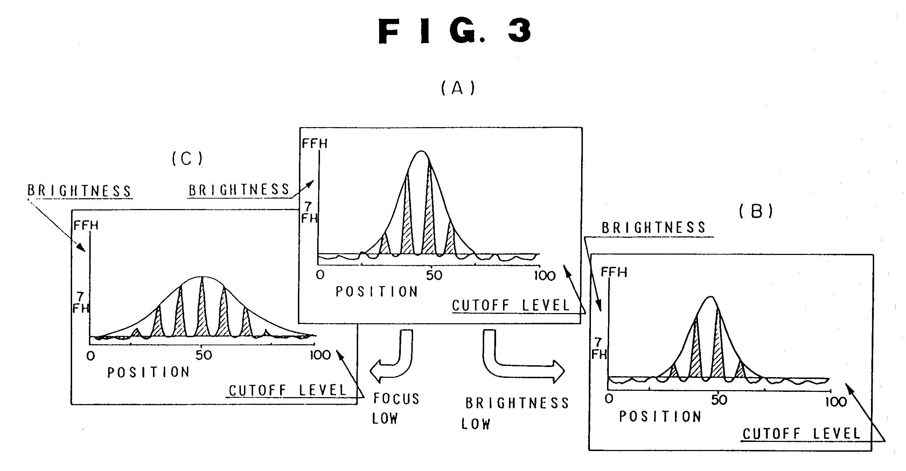

Fig. 2 is a brightness distribution characteristic diagram of each fluorescent substance 2a when the eight fluorescent substances 2a luminesce within the beam spot 5b, and eight heaps 2b correspond to respective fluorescent substances 2a. In the prior art, data 6 being composed of three discrete values derived from the characteristic diagram is sought and compared with the standard data shown in Fig. 3(A). If its shape is close to that of Fig. 3(B), the brightness is determined to be low, and if its shape is close to that of Fig. 3(C), the focus is determined to be low.

Since the measurement of the beam spot luminescence distribution in the prior art is carried out as mentioned above, the electron beam 5 is intercepted by the shadow mask 3, and only the beam passing through the holes 4a makes the fluorescent substances 2a luminesce as clearly seen from Fig. 1. Consequently, the luminescence distribution within the beam spot 5b can be detected only by the sampling data having the same number as that of those fluorescent substances 2a which are luminescing, and the brightness of a part where the electron beam 5 is intercepted by the shadow mask 3 cannot be detected. Therefore, in the case of a high resolution CRT with fine beam diameters, there is a problem that the number of pieces being able to be sampled becomes 3 - 4 and therefore the highly accurate measurement cannot be carried out as the beam spot 5b is very small.

A measuring method according to the preamble of claim 1 is known from US-A 4 408 163. In this known measuring method the luminescence distribution within a beam spot of an electron beam irradiated on a tube surface of a color cathode ray tube is measured in such a way that, in a first step, one fluorescent substance on the tube surface is selected, subsequently a measurement region of brightness within the selected fluorescent substance is defined and then the irradiated locations of the electron beam are varied such that the measurement region is always lying within the beam spot. Subsequently, the brightness of the measurement region on each irradiated location of the electron beam is measured and the luminescence distribution within the beam spot is determined based on each measured brightness value. By this method it is possible to overcome the a.m. disadvantage of the measuring method shown in figures 1 through 3.

In the measuring method known from US-A 4 408 163, the necessary variation or shift of the measurement region is performed by providing incremental currents which are sufficient to deflect the beam for a predetermined amount.

It is therefore the object of the present invention to improve a method according to the preamble of claim 1 in such a way that it can be performed with minimal costs.

This object is solved by the measures indicated in the characterizing part of claim 1. Advantageous features of a device for performing this measuring method are the subject-matter of claims 2 through 4.

In the following, the invention is described in more detail with reference to the drawings, in which:
Fig. 1 is a perspective view of the inside of a CRT to explain a measuring method for the beam spot luminescence distribution in the prior art;
Fig. 2 is a characteristic diagram for the brightness distribution obtained by this known measuring method ;
Fig. 3 is a diagram indicating standard data being used for the estimation of the beam spot;
Fig. 4 is an explanation diagram indicating the measurement principle in a measuring method for the beam spot luminescence distribution and a device therefore according to an embodiment of the invention;
Fig. 5 shows the main components of a measuring device according to this embodiment of the invention;
Fig 6 is an explanation diagram indicating the measuring method according to this embodiment of the invention;
Fig. 7 is a flow chart indicating the procedure of the measuring method ;
Fig. 8 is a block diagram showing the constitution of a synchronous signal phase control device shown in Fig. 5;
Fig. 9 is a waveform chart indicating the operation of the control device; and
Fig. 10 is a timing chart indicating the operation of the control device.

An embodiment of the present invention will now be described referring to the accompanying drawings.

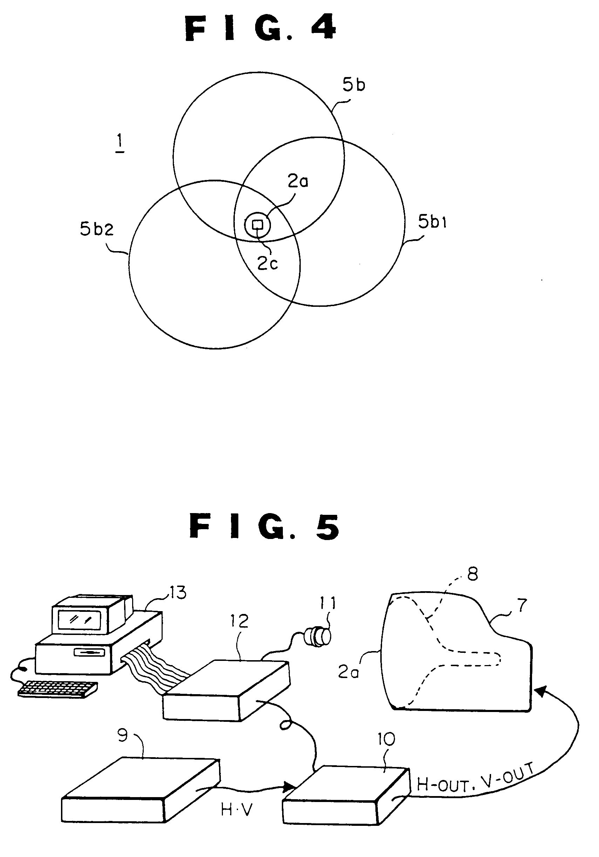

According to Fig. 4, in a tube surface 1 of a CRT, any one fluorescent substance 2a is selected and a measurement region 2c for measuring the luminescent brightness of the selected fluorescent substance 2a is determined. The central part having the highest luminescent brightness of the fluorescent substance 2a is selected as the measurement region 2c.

Next, the electron beam is emitted so that the fluorescent substance 2a is irradiated. The example in Fig. 4 shows a situation where the fluorescent substance 2a is located on the lower part within the beam spot 5b, and the luminescent brightness of the measurement region 2c is measured in this condition. The electron beam is moved to the position 5b₁, and the luminescent brightness of the measurement region 2c at this time is measured. Subsequently, the electron beam is moved and the beam spot 5b is moved to the position 5b₂, and the brightness of the measurement region 2c at this time is measured.

Three measured brightness values obtained by the above-mentioned treatment are approximately equivalent to three luminescent brightness values obtained regarding one beam spot 5b. Accordingly, the beam spot 5b is moved minutely in the horizontal direction and the vertical direction so that the measurement region 2c is always contained within it, thereby the brightness data for many locations within the beam spot 5b can be sampled.

In order to move the beam spot 5b, that is, the electron beam minutely in the horizontal direction and the vertical direction, the phases of the horizontal and vertical synchronous signals being given to the deflecting circuit of the CRT according to the core feature of the invention are controlled.

Fig. 5 shows main components of an embodiment of the measuring device. In Fig. 5, numeral 7 designates a monitor, numeral 8 designates a CRT to be measured, which is provided in the monitor 7, numeral 9 designates a general-purpose signal generator for generating the horizontal synchronous signal H, the vertical synchronous signal V etc., and numeral 10 designates a synchronous signal phase control device for controlling the phases of the synchronous signals H, V and supplying them to a deflecting circuit (not shown) of the monitor 7.

Numeral 11 designates a CCD camera as a brightness measuring means for measuring the brightness in the measurement region 2c of the fluorescent substance 2a of the CRT 8, numeral 12 designates a picture processing device for processing picture signals obtained from the CCD camera 11, and numeral 13 designates a computer such as a personal computer for controlling the synchronous signal phase control device 10 and the picture processing device 12.

Next, the operation will be explained.

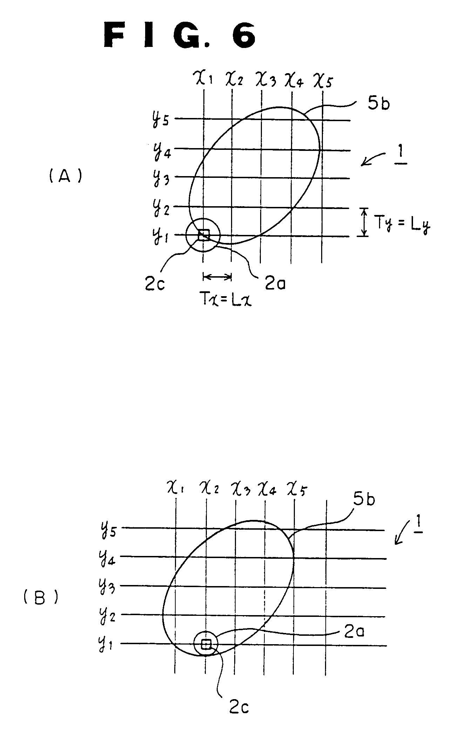

First, as indicated in Fig. 6(A), the X·Y coordinates are fixed on the tube surface 1 of the CRT 8. The measurement region 2c of the fluorescent substance 2a is located on the (x₁, y₁) coordinates, and the horizontal and vertical synchronous signals H, V are phase-controlled and the beam spot 5b is controlled so that the measurement region 2c is located on its periphery. In Fig. 6, the beam spot 5b is illustrated as an elliptical form for convenience.

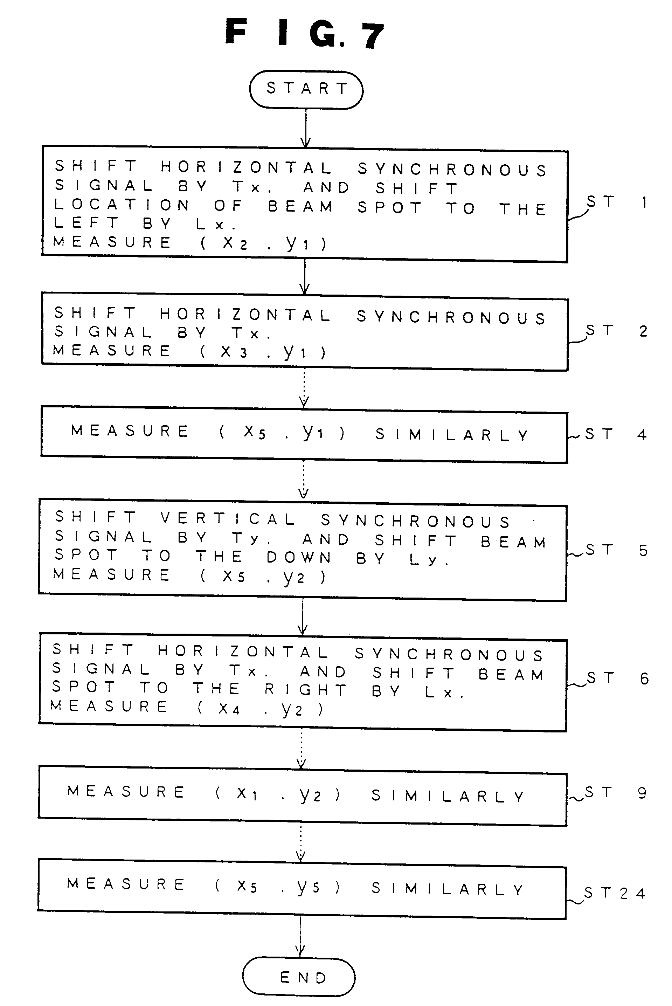

Next, according to step STl in Fig. 7, the horizontal synchronous signal H is deviated by T_{X} thereby the beam spot 5b is shifted to the left by L_{X}. As a result, the measurement region 2c is located on coordinates (x₂, y₁) as shown in Fig. 6(B). In this state, the measurement region 2c is photographed by the CCD camera 11 and its brightness is measured. Subsequently according to step ST2, the horizontal synchronous signal H is further deviated by T_{X} and the measurement region 2c is on coordinates (x₃, y₁), and the brightness of the measurement region 2c under this condition is measured by the CCD camera 11. Similarly, according to steps ST3, ST4, the horizontal synchronous signal H is deviated by T_{X} sequentially, thereby the measurement region 2c is located on each of coordinates (x₄, y₁), (x₅, y₁) and the brightness of the measurement region 2c in each position is measured by the CCD camera 11.

Next, in step ST5, the vertical synchronous signal V is shifted by T_{y};thereby the beam spot 5b is deviated downwards by L_{y}. As a result, the measurement region 2c is located on coordinates (x₅, y₂) and its brightness is measured. Hereafter, in steps ST6 - ST9, while the horizontal synchronous signal H is shifted by Tₓ, the brightness of the measurement region 2c at each of locations (x₄, y₂) - (x₁, y₂) is measured by the CCD camera 11.

Further, similarly until to step ST24, the horizontal and vertical synchronous signals are shifted by Tₓ, T_{y};thereby the beam spot 5b is shifted by Lₓ, L_{y}. As a result, the measurement region 2c is located sequentially on each of coordinates (x₁, y₃) - (x₅, y₅), and the brightness of the measurement region 2c in each position is measured.

According to the above processing, 24 sampling data can be obtained within the same beam spot 5b. Further, steps ST3, ST7, ST8 and ST10 - ST23 are omitted in Fig. 7. Using each sampling data, the luminescence distribution can be obtained, for example, by the method shown in Fig. 3.

Next, the constitution of the synchronous signal phase control device 10 will be explained.

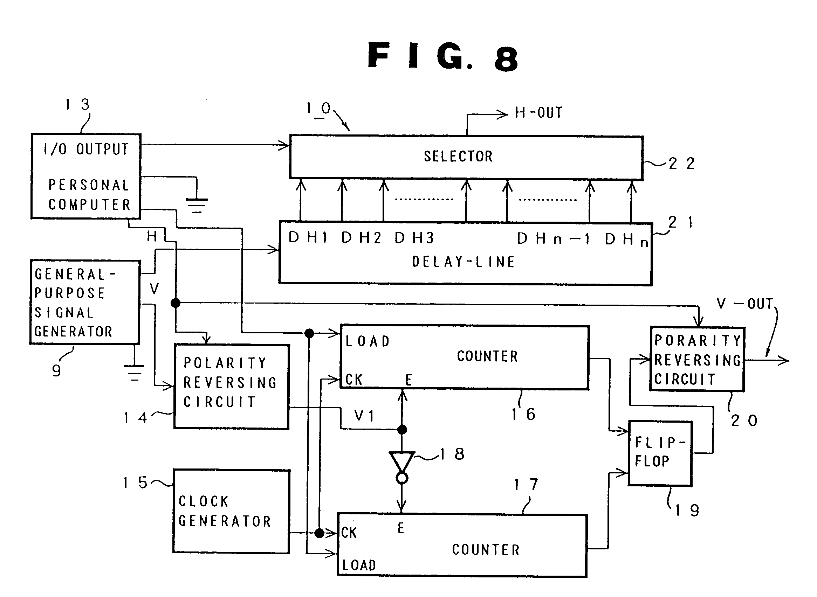

In Fig. 8, numeral 14 designates a polarity reversing circuit for reversing the polarity of the vertical synchronous signal V derived from a general-purpose signal generator 9 when the polarity is negative, and for allowing the signal V to pass unchanged when the polarity is positive, the polarity reversing circuit 14 being controlled by a computer 13. Numeral 15 designates a clock generator for generating clocks of 20 MHz for example, and numerals 16, 17 designate counters for counting the clocks and being supplied with preset values from the computer 13. The counter 17 starts the count at the rise of the vertical synchronous signal V₁ having positive polarity from the polarity reversing circuit 14. The counter 17 starts the count at the rise of the reversed signal of the vertical synchronous signal V₁ by the inverter 18, that is, at the fall of the vertical synchronous signal V₁.

Numeral 19 designates a flip-flop being triggered by carry pulses of the counters 16, 17, and numeral 20 designates a polarity reversing circuit for reversing the output pulse of the flip-flop 19 by the control of the computer 13 if necessary, and making it a vertical synchronous signal V-OUT.

A display line 21 delays a horizontal synchronous signal H from the general-purpose signal generator 9 sequentially e.g., every 1 nsec, and outputs delayed horizontal synchronous signals DH₁, DH₂, ... DHₙ, and a selector 22 selects one among the delayed horizontal synchronous signals DH₁ - DHₙ obtained from the delay line 21 in response to the command of the computer 13, and makes it a horizontal synchronous signal H-OUT.

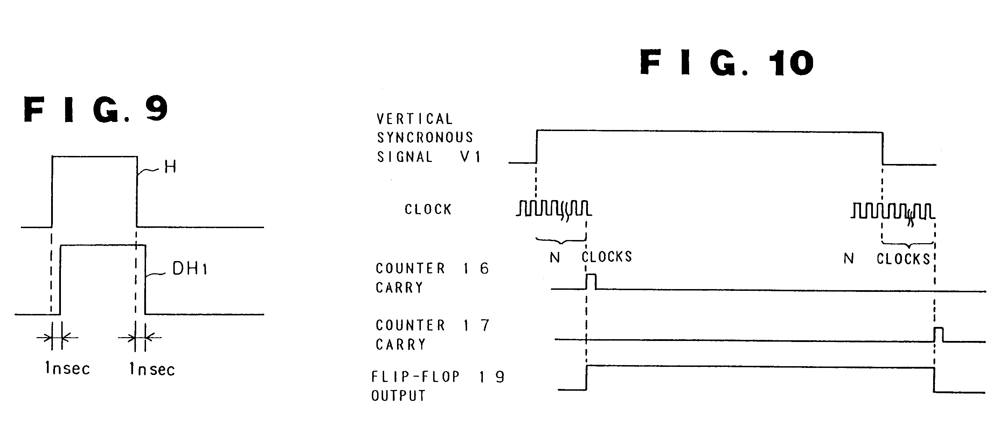

Next, the operation will be explained. Assuming that the diameter of the beam spot 5b is approximately 10 - 60 nsec calculated in terms of the horizontal scanning time, it is necessary to delay the phase of the horizontal synchronous signal H by the minuteness of Tₓ ≒ 1 - several ten nsec. The delay line 21 can take out the horizontal synchronous signals DH₁ - DHₙ having their phases delayed 1 nsec by 1 nsec from the n output terminals. Fig. 9 indicates an example for the horizontal synchronous signal DH₁ which is delayed by 1 nsec with respect to the original horizontal synchronous signal H.

The computer 13 controls the selector 22 so that one horizontal synchronous signal having a delay amount corresponding to the number of desired sampling data is selected among these delayed horizontal synchronous signals DH₁ - DHₙ. The selected horizontal synchronous signal H-OUT is supplied to the deflecting circuit of the CRT 8.

The vertical synchronous signal V derived from the general-purpose generator 9 has either the positive polarity or the negative polarity. In the case of the negative polarity, the vertical synchronous signal V is reversed by the polarity reversing circuit 14, and in the case of the positive polarity, the signal V is made pass intact, thereby the vertical synchronous signal V₁ having the positive polarity as shown in Fig. 10 can be obtained. The counters 16, 17 are supplied with preset values corresponding to the desired shifting amount T_{y} of the vertical synchronous signal V₁ by the computer 13 in advance.

First, the counter 16 starts the counting from the preset value with the timing of the rise of the vertical synchronous signal V₁. On counting N clocks corresponding to the preset value, carry pulses are outputted, whereby the flip-flop 19 is reversed and its output rises.

Next, when the vertical synchronous signal V₁ falls, the counter 17 starts the counting from the preset value through the inverter 18. On counting N clocks corresponding to the preset value, carry pulses are outputted and the output of the flip-flop 19 falls. As a result, the output pulse of the flip-flop 19 becomes a pulse of the positive polarity having the same pulse width as the vertical synchronous signal V₁ and shifted phases.

When the deflecting circuit is operated by the vertical synchronous signal of positive polarity, the output pulse of the flip-flop 19 passes unchanged through the polarity reversing circuit 20 and becomes the vertical synchronous signal V-OUT. Also, when the deflecting circuit is operated by the vertical synchronous signal of negative polarity, the output pulse is reversed by the polarity reversing circuit 20 and becomes the vertical synchronous signal V-OUT which is sent to the deflecting circuit.

Further, the vertical synchronous signal V-OUT can be provided by the delay lines similarly to the generation the horizontal synchronous signal, but in order to move the beam spot in the vertical direction by the amount of its diameter, the vertical synchronous signal must be delayed by about 10 »sec - 60 »sec and therefore many delay line elements are needed.

As mentioned above, in the measuring method according to the present invention, the electron beam is moved to a plurality of positions by controlling the phase of the synchronous signal supplied to the deflecting circuit of the CRT, and in this case, the method comprises the step of moving the electron beam so that one specific measurement region always exists within the beam spot, and the step of measuring the brightness of the measurement region in each of the plural positions.

The measuring method according to the present invention comprises a synchronous signal phase control device for controlling the phase of the synchronous signal being supplied to the deflecting circuit so as to move the electron beam to a plurality of positions while the measurement region of the brightness set within one fluorescent substance selected in the tube surface of the CRT always lies within the beam spot of the electron beam, and means for measuring the brightness of the measurement region in each position of the electron beam.

According to the present invention, many brightness data can be sampled within the beam spot, and therefore the luminescence distribution of the beam spot can be measured with high accuracy and the focus and the resolution for the picture displayed on the CRT can be measured with high accuracy. Further, as the phase of the synchronous signal is controlled, it is possible to realize the present invention with a minimum of circuit components.

## Claims

1. A measuring method wherein the luminescence distribution within a beam spot (5b) of an electron beam (5) irradiated on a tube surface (1) of a color cathode ray tube (8) is measured, said measuring method comprising the steps of:
**[a]** selecting one fluorescent substance (2a) on said tube surface (1);
**[b]** defining a measurement region of brightness (2c) within said selected fluorescent substance (2a);
**[c]** varying irradiated locations of said electron beam (5) such that said measurement region (2c) is always lying within said beam spot (5b);
**[d]** measuring the brightness of said measurement region (2c) on each irradiated location of said electron beam (5);
**[e]** and determining the luminescence distribution within said beam spot based on each measured brightness value;
*characterized in that*
said step **[c]** of varying irradiated locations of said electron beam (5) is performed by controlling the phases of synchronous signals (H-OUT, V-OUT) applied to a deflecting circuit of said cathode ray tube (8) such that the respective irradiated location is moved.

2. A measuring device for measuring the luminescence distribution within a beam spot (5b) of an electron beam (5) irradiated on a tube surface (1) of a color cathode ray tube (8), comprising:
an electron beam moving means (10,12) for varying irradiated locations of said electron beam (5) such that a measurement region (2c) of brightness defined within a specific fluorescent substance (2a) on said tube surface (1) is lying within said beam spot (5b); and
means (11) for measuring the brightness of said measurement region (2c) on each irradiated position of said electron beam (5),
*characterized in that*
said electron beam moving means (10,12) comprises a synchronous signal phase control device (10) for varying the phases of synchronous signals (H-OUT, V-OUT) applied to a deflecting circuit of said cathode ray tube (8), and a control circuit (12) for supplying a command signal to said synchronous signal phase control device (10) in response to the phase amount corresponding to each irradiated location of said electron beam (5).

3. Measuring device according to claim 2, wherein said synchronous signal phase control device (10) comprises means (21,22) for shifting the phase of a reference horizontal synchronous signal in response to said command signal from said control circuit (12), and means (16,17,19) for shifting the phase of a reference vertical synchronous signal in response to a further command signal from said control circuit (12).

4. A measuring device according to claim 3, wherein said means (21,22) for shifting the phase of said reference horizontal signal comprises a delay line (21) for shifting the phase of said reference horizontal synchronous signal by a prescribed quantity and for generating a plurality of delayed horizontal synchronous signals, and a selector (22) for selecting one delayed synchronous signal in response to said command signal from said control circuit (12), and wherein said means (16,17,19) for shifting the phase of said reference vertical synchronous signal comprises a first counter (17) for starting the counting with the rise of said reference vertical synchronous signal and for counting reference pulses having the number corresponding to the phase deviation quantity being indicated by said further command signals, a second counter (16) for starting the counting with the fall of the reference vertical synchronous signal and for counting reference pulses having the number corresponding to the phase deviation quantity, and a flip-flop (19) which is set by an output signal of said first counter (17) and which is reset by an output signal of said second counter (16).

## Patentansprüche

1. Meßverfahren, bei dem die Lumineszenzverteilung in einem Strahl-Lichtfleck (5b) eines Elektronenstrahls (5), der auf eine Röhrenoberfläche (1) einer Farb-Kathodenstrahlröhre (8) einstrahlt, gemessen wird, wobei das Meßverfahren die Schritte aufweist:
**[a]** Auswählen einer fluoreszierenden Substanz (2a) auf der Röhrenoberfläche (1);
**[b]** Definieren eines Meßbereichs einer Helligkeit (2c) in der ausgewählten fluoreszierenden Substanz (2a);
**[c]** derartiges Ändern bestrahlter Stellen des Elektronenstrahls (5), daß der Meßbereich (2c) immer in dem Strahl-Lichtfleck (5b) liegt;
**[d]** Messen der Helligkeit des Meßbereichs (2c) auf jeder bestrahlten Stelle des Elektronenstrahls (5);
**[e]** und Bestimmen der Lumineszenzverteilung in dem Strahl-Lichtfleck auf der Grundlage der gemessenen Helligkeitswerte;
*dadurch gekennzeichnet, daß*
der Schritt **[c]** des Änderns bestrahlter Stellen des Elektronenstrahls (5) mittels einem Steuern der Phasen von Synchronisationssignalen (H-OUT, V-OUT), die derart an eine Ablenkungsschaltung der Kathodenstrahlröhre (8) angelegt werden, daß die jeweils bestrahlte Stelle bewegt wird, durchgeführt wird.

2. Meßvorrichtung zum Messen der Lumineszenzverteilung in einem Strahl-Lichtfleck (5b) eines Elektronenstrahls (5), der auf eine Röhrenoberfläche (1) einer Farb-Kathodenstrahlröhre (8) einstrahlt, mit:
einer Elektronenstrahl-Bewegungseinrichtung (10,12), die bestrahlte Stellen des Elektronenstrahls (5) derart ändert, daß ein Meßbereich (2c) einer Helligkeit, der in einer spezifischen fluoreszierenden Substanz (2a) auf der Röhrenoberfläche (1) definiert ist, in dem Strahl-Lichtfleck (5b) liegt; und
einer Einrichtung (11), die die Helligkeit des Meßbereichs (2c) auf jeder bestrahlten Stelle des Elektronenstrahls (5) mißt,
*dadurch gekennzeichnet, daß*
die Elektronenstrahl-Bewegungseinrichtung (10,12) eine Synchronisationssignalphasen-Steuervorrichtung (10), die die Phasen von Synchronisationssignalen (H-OUT, V-OUT), die an die Ablenkungsschaltung der Kathodenstrahlröhre (8) angelegt werden, ändert, und eine Steuerschaltung (12) aufweist, die als Reaktion auf den Phasenbetrag, der jeder betrahlten Stelle des Elektronenstrahls (5) entpricht, ein Befehlssignal an die Synchronisationssignalphasen-Steuervorrichtung (10) anlegt.

3. Meßvorrichtung nach Anspruch 2, bei der die Synchronisationssignalphasen-Steuervorrichtung (10) eine Einrichtung (21,22), die die Phase eines horizontalen Referenz-Synchronisationssignals als Reaktion auf das Befehlssignal aus der Steuerschaltung (12) verschiebt, und eine Einrichtung (16,17,19) aufweist, die die Phase eines vertikalen Referenz-Synchronisationssignals als Reaktion auf ein weiteres Befehlssignal aus der Steuerschaltung (12) verschiebt.

4. Meßvorrichtung nach Anspruch 3, bei der die Einrichtung (21,22), die die Phase des horizontalen Referenz-Synchronisationssignals verschiebt, eine Verzögerungsleitung (21), die die Phase des horizontalen Referenz-Synchronisationssignals um einen vorgeschriebenen Betrag verschiebt und eine Mehrzahl von verzögerten horizontalen Synchronisationssignalen erzeugt, und eine Auswahleinrichtung (22) aufweist, die als Reaktion auf das Befehlssignal aus der Steuerschaltung (12) ein verzögertes Synchronisationssignal auswählt, und bei der die Einrichtung (16,17,19), die die Phase des vertikalen Referenz-Synchronisationssignals verschiebt, einen ersten Zähler (17), der das Zählen mit dem Anstieg des vertikalen Referenz-Synchronisationssignal startet, und der Referenzpulse zählt, die die Nummer aufweisen, die dem Phasenabweichungsbetrag, der mittels weiterer Befehlssignale angezeigt wird, entsprechen, einen zweiten Zähler (16), der das Zählen mit dem Abfall des vertikalen Referenz-Synchronisationsignals startet und der Referenzpulse zählt, die die Nummer aufweisen, die dem Phasenabweichungsbetrag entsprechen, und ein Flipflop (19) aufweist, welches von einem Ausgangssignal des ersten Zählers (17) gesetzt wird, und welches von einem Ausgangsignal des zweiten Zähler (16) zurückgesetzt wird.

## Revendications

1. Procédé de mesure selon lequel la distribution de luminescence à l'intérieur d'un point de faisceau (5b) d'un faisceau électronique (5) irradié sur une surface de tube (1) d'un tube à rayons cathodiques couleur (8) est mesuré, ledit procédé de mesure comprenant les opérations de :
[a] sélectionner une substance fluorescente (2a) sur ladite surface de tube (1) ;
[b] définir une région de mesure de la luminance (2c) à l'intérieur de ladite substance fluorescente sélectionnée (2a) ;
[c] faire varier les endroits irradiés dudit faisceau électronique (5) de façon que ladite région de mesure (2c) se trouve toujours à l'intérieur dudit point de faisceau (5b) ;
[d] mesurer la luminance de ladite région de mesure (2c) sur chaque endroit irradié dudit faisceau électronique (5) ;
[e) et déterminer la distribution de luminescence à l'intérieur dudit point de faisceau fondé sur chaque valeur de luminance mesurée ;
caractérisé en ce que
ladite opération [c] de variation des endroits irradiés dudit faisceau électronique (5) est accomplie en commandant les phases de signaux synchrones (H-OUT, V-OUT) appliqués à un circuit de déviation dudit tube à rayons cathodiques (8) de façon que l'endroit irradié respectif soit déplacé.

2. Dispositif de mesure pour mesurer la distribution de la luminescence à l'intérieur d'un point de faisceau (5b) d'un faisceau électronique (5) irradié sur une surface de tube (1) d'un tube à rayons cathodiques couleur (8), comprenant :
des moyens de déplacement d'un faisceau électronique (10, 12) pour faire varier les endroits irradiés dudit faisceau électronique (5) de façon qu'une région de mesure (2c) de luminance définie à l'intérieur d'une substance fluorescente spécifique (2a) sur ladite surface de tube (1) se trouve à l'intérieur dudit point de faisceau (5b) ; et
des moyens (11) pour mesurer la luminance de ladite région de mesure (2c) sur chaque position irradiée dudit faisceau électronique (5),
caractérisé en ce que
lesdits moyens de déplacement de faisceau électronique (10, 12) comprennent un dispositif de commande de la phase de signal synchrone (10) pour faire varier les phases des signaux synchrones (H-OUT , V-OUT) appliqués à un circuit de déviation dudit tube à rayons cathodiques (8) et un circuit de commande (12) pour fournir un signal de commande audit dispositif de commande de phase de signal synchrone (10) en réponse à une quantité de phase correspondant à chaque endroit irradié dudit faisceau électronique (5).

3. Dispositif de mesure selon la revendication 2, dans lequel le dispositif de commande de phase de signal synchrone (10) comprend des moyens (21, 22) pour décaler la phase d'un signal synchrone horizontal de référence en réponse au signal de commande précité en provenance dudit circuit de commande (12) et des moyens (16, 17, 19) pour décaler la phase d'un signal synchrone vertical de référence en réponse à un autre signal de commande du circuit de commande (12).

4. Dispositif de mesure selon la revendication 3, dans lequel les moyens précités (21, 22) pour décaler la phase du signal horizontal de référence précité comprennent une ligne à retard (21) pour décaler la phase dudit signal synchrone horizontal de référence selon une quantité prédéterminée et pour engendrer une pluralité de signaux synchrones horizontaux retardés, et un sélectionneur (22) pour sélectionner un signal synchrone retardé en réponse audit signal de commande du circuit de commande précité (12), et dans lequel les moyens précités (16, 17, 19) pour décaler la phase du signal synchrone vertical de référence précité comprennent un premier compteur (17) pour commencer le comptage avec la montée dudit signal synchrone vertical de référence et pour compter les impulsions de référence ayant le nombre correspondant à la quantité de déviation de phase indiqué par les signaux de commande précités, et un second compteur (16) pour commencer le comptage avec la descente du signal synchrone vertical de référence et pour compter les impulsions de référence ayant le nombre correspondant à la quantité de déviation de phase, et une bascule (19) qui est mise par un signal de sortie dudit premier compteur (17) et qui est remise à l'état initial par un signal de sortie dudit second compteur (16).
